Europäisches Patentamt

European Patent Office

Office européen des brevets

(19)

(11) **EP 1 174 038 A1**

(12) **EUROPÄISCHE PATENTANMELDUNG**

(43) Veröffentlichungstag:
    **23.01.2002   Patentblatt 2002/04**

(51) Int Cl.⁷: **A23B 7/16**, A23B 7/022,
     A23L 3/42

(21) Anmeldenummer: **00115567.0**

(22) Anmeldetag: **19.07.2000**

(84) Benannte Vertragsstaaten:
    **AT BE CH CY DE DK ES FI FR GB GR IE IT LI LU
    MC NL PT SE**
    Benannte Erstreckungsstaaten:
    **AL LT LV MK RO SI**

(71) Anmelder: **BATTELLE INGENIEURTECHNIK
    GmbH
    D-65760 Eschborn (DE)**

(72) Erfinder:
    • **Lukas, Manfred
      65468 Trebur (DE)**
    • **Kriszio, Horst
      63075 Offenbach (DE)**

• **Wandzilak, Lukasz
  61476 Kronberg (DE)**
• **Wittekind, Jürgen
  60596 Frankfurt am Main (DE)**
• **Schmittberger, Horst
  64285 Darmstadt (DE)**
• **Schumann, Steffen, Dr.
  55218 Ingelheim (DE)**

(74) Vertreter: **Hansmann, Axel et al
    Patent- und Rechtsanwälte Hansmann, Vogeser,
    Dr. Boecker, Alber, Dr. Strych, Liedl Postfach 70
    08 60
    81308 München (DE)**

(54) **Verfahren und Vorrichtung zur Konditionierung von Früchten für eine nachfolgende
    Trocknung zur Herstellung eines Instantprodukts**

(57)   Verfahren, Vorrichtung und ein Behandlungslösungssystem zur Konditionierung von Früchten für eine nachfolgende Trocknung zur Herstellung eines Instantprodukts, wobei das Behandlungslösungssystem mehrere Verarbeitungshilfsstoffe, die lebensmittelrechtlich zulässig sind, umfaßt, die Früchte als ganzes oder als Fruchtstücke im frischen oder gefrorenem Zustand in einem oder mehreren aufeinanderfolgenden Verfahrensschritten einer Behandlung mit Calcium-Ionen, Pektinesterase und einer Öl-in-Wasser-Emulsion ausgesetzt werden, welcher ein Emulgator mit einem Anteil von mehr als 1 Gew.% zugesetzt ist, wobei die Behandlung vorzugsweise zwei Bäder (2a, 2b) mit Ein- und Austragungsmitteln (1, 4a, 4b) für die Früchte, Pump- und Dosiermitteln (5a, 5b, 10a, 10b) für die Behandlungslösung (en), mechanischen Mitteln (3b) zur Dispergierung der Öl-in-Wasser-Emulsion und einer Temperatursteuerung (7a, 7b, 8a, 8b) aufweist.

FIG. 1

EP 1 174 038 A1

**Beschreibung**

Die Erfindung betrifft ein Verfahren, eine Vorrichtung und ein Behandlungslösungssystem zur Konditionierung von Früchten für eine nachfolgende Trocknung zur Herstellung eines Instantprodukts. Das Behandlungslösungssystem umfaßt mehrere Verarbeitungshilfsstoffe, die lebensmittelrechtlich zulässig sind. Dabei kann es sich bei den Früchten sowohl um ganze, als auch geschnittene Früchte im frischen oder gefrorenen Zustand, gegebenenfalls auch leicht getrockneten Zustand handeln, die mit oder ohne Schale konditioniert und danach getrocknet werden.

Das Trocknen von Früchten ist eine sehr alte Technik zum Konservieren der Früchte. Unter den Gesichtspunkten der industriellen Früchteverwertung kommen jedoch nur Trocknungsverfahren in Betracht, bei denen unter Anwendung erhöhter Temperatur in entsprechenden Trocknungsanlagen große Fruchtmengen in kurzer Zeit getrocknet werden können.

Mit derartigen Trocknungsverfahren ist es möglich, saisonbedingte große Erntemengen zu trocknen, bevor die Früchte verderben. Um z.B. Erntespitzen zu bewältigen und die vorhandenen Trocknungsanlagen rentabel zu nutzen, ist man jedoch auch darauf angewiesen, die Früchte vorübergehend durch Tiefgefrieren zu konservieren. Infolge der beim Gefrieren eintretenden Zellwandschädigung kann jedoch das nachfolgende Trocknen außerordentlich erschwert werden.

Unter Trocknung bei erhöhter Lufttemperatur neigen die Früchte je nach Fruchtart, -sorte und Reifegrad ohnehin zu einem Verkleben der Früchte, was eine schonende Trocknung unter Umständen unmöglich macht und was bei der Verwendung der getrockneten Früchte in Instantprodukten sehr ungünstig ist, da die verklebten Fruchtoberflächen nur langsam wieder Wasser aufnehmen.

Das Verkleben der Früchte wird sowohl durch den Fruchtzucker als auch durch das Pectin in den Früchten bewirkt. Die Früchte verkleben besonders stark, wenn durch Schneiden oder nach dem Auftauen gefrorener Früchte Fruchtsaft austritt. Dies ist bei Früchten wie Erdbeeren für die nachfolgende Trocknung besonders problematisch.

Eine altbekannte Maßnahme aus der Lebensmittelindustrie gegen Verkleben allgemein ist die Anwendung von Backtrennölen. Aus der DE 30 07 469 A1 sind ferner mittelkettige Triglyceride mit einem Gemisch aus natürlichen, im Triglycerid löslichen Wachsestern als Trennöl bekannt. Dieses Trennöl wird u.a. auf Trockenfrüchten und Geleeartikeln aufgebracht und bilden auf der Oberfläche der Früchte usw. einen dünnen, das Verkleben verhindernden Ölfilm. Dieser Ölfilm ist allerdings einer Rehydration abträglich, die für Instantprodukte wesentlich ist. Ferner erhalten die Früchte unter Umständen einen fruchtuntypischen, hohen Fettgehalt. Durch Verwendung einer wässrigen Ölemulsion kann man versuchen, die genannten Nachteile zu verringern, man kann sie aber nicht völlig vermeiden.

Bei Verwendung einer Öl-in-Wasser-Emulsion ergibt sich ferner ein weiterer Nachteil dadurch, daß die Emulsion unvermeidbarer Weise Fruchtsaft aufnimmt, der zum einen den Früchten dann als wesentlicher Aromabestandteil fehlt und zum anderen die Ölemulsion verdünnt. Infolge dieser Saftaufnahme steht ein großes Flüssigkeitsvolumen zur Entsorgung an, das vor der Einleitung ins Abwasser kostenaufwendig soweit vom Öl befreit werden muß, bis es den jeweiligen Einleitebestimmungen entspricht.

Unabhängig vom Aufbringen von Trennölen auf getrocknete Fruchtstücke und dergleichen ist die Anwendung von Calcium-Ionen zur Behandlung von Früchten, z.B. um deren Festigkeit vor einer Sterilisationsbehandlung zu erhöhen, gleichermaßen seit langem bekannt, und zwar auch in Kombination mit esterabspaltenden Enzymen in Form von Pektinesterase (US 2 534 263). In der EP 0123 345 wird eine Konsistenzverbesserung von Früchten infolge Gelbildung durch Anwendung von Pectinenzymen angegeben.

Zur Erlangung von Instant-Trockenfrüchten mit guten Rehydrationseigenschaften sind jedoch weder eine die Wasseraufnahme beeinträchtigende Verfestigung, noch eine das Verkleben fördernde Gelbildung wünschenswert.

Der Erfindung liegt die Aufgabe zugrunde, ein Verfahren und eine Vorrichtung sowie ein Behandlungslösungssystem anzugeben, mit denen die Früchte bzw. Fruchtstücke so konditioniert werden können, daß sie dann erfolgreich getrocknet werden können und nach ihrer Trocknung noch ein gutes Rehydrationsverhalten zeigen.

Diese Aufgabe wird durch den Gegenstand der unabhängigen Ansprüche gelöst. Bevorzugte Weiterbildungen sind in den Unteransprüchen definiert.

Danach gelang es den Erfindern, die obigen an sich bekannten Trennmittel trotz der aufgezeigten jeweiligen Problematik hinsichtlich der Herstellung der gewünschten Instantprodukte einzusetzen. Die erfindungsgemäße Lösung besteht darin, als Behandlungsmittel sowohl Calcium-Ionen und Pektinesterase als auch eine Öl-in-Wasser-Emulsion mit einem Emulgator einzusetzen, der mit einem im Vergleich zu gängigen Emulsionen der Lebensmittelindustrie erhöhten Anteil von mehr als 1 Gew.% der Emulsionsmasse eingesetzt wird. In dieser speziellen Kombination gelang es, die an sich bekannten Mittel einzusetzen, erfolgreich ein Verkleben der Früchte und Fruchtstücke in der nachfolgenden Trocknung zu verhindern und darüber hinaus gut rehydrierbare Instantprodukte der jeweiligen Frucht herzustellen. Dies war insbesondere deshalb überraschend, als die eingehenden Versuche der Erfinder mit CalciumIonenzusatz und Pektinesterase alles andere als ermutigend waren und z.B. beim Einsatz von gängigen Backtrennölen sowie deren Emulsionen auf Erdbeerstücken lediglich ölige Fruchtmassen gewonnen wurden, die für die nachfolgende Trocknung völlig ungeeignet waren.

Obgleich die genannten Mittel in einer einzigen kombinierten Behandlungslösung in Form einer Öl-in-Wasser-Emulsion mit den genannten Zusätzen anwendbar sind, werden speziell die stark fruchtsafthaltigen oder Fruchtsaft abgebenden Früchte vor der Trocknung bevorzugt einer mehrstufigen Behandlung unterzogen, in der zunächst unter Anwendung von Calcium-Ionen der Saftaustritt deutlich verringert wird, so daß in einem nachfolgenden Behandlungsschritt eine geeignete, wässrige Trennöl-Emulsion aufgebracht werden kann, ohne daß diese durch Fruchtsaft nennenswert verdünnt wird und ohne daß die Früchte nennenswerte Mengen Öl aufnehmen. Die Pektinesterase kann nach oder gleichzeitig mit der Anwendung der Calcium-Ionen erfolgen, wobei sie dem Calcium-Ionenbad, einem separaten Bad oder auch dem Emulsionsbad zugegeben werden kann.

Bevorzugt werden die Früchte in frischem und gefrorenem Zustand zunächst in eine erwärmte, wässrige Calcium-Ionen haltige Lösung eingebracht werden. Von den bisher getesteten unterschiedlichen möglichen Calciumlösungen wie Calciumcitrat hat sich die Calciumchloridlösung am meisten bewährt, weshalb sie bevorzugt wird. Die Temperatur dieser Lösung wird so eingestellt, daß sich nach dem Einbringen der Früchte eine für die Wirksamkeit der nachfolgenden Enzymbehandlung optimale Temperatur einstellt, die im allgemeinen um 35 °C liegt.

Die Früchte werden nach einer ausreichenden Einwirkdauer dieser Calcium-Ionenlösung unter gleichzeitigem Abseihen von das Verkleben fördernden Fruchtfeinteilen entnommen und werden in eine Pektinesteraselösung zur Demethoxylierung des Pectins überführt.

In der beschriebenen Weise können die Früchte in kurzer Zeit und damit auf schonende Weise auf die für die Enzymwirksamkeit der Pektinesterase optimale Temperatur erwärmt werden, da die Temperatur der Calcium-Ionenlösung hinreichend hoch gewählt werden kann und speziell auch über die kritische Temperatur (etwa 45 °C) für Pektinesterase erwämt werden kann, die hier noch nicht eingesetzt ist. Dies ist besonders vorteilhaft, wenn gefrorene Früchte getrocknet werden sollen. Nach der Pektinesterasebehandlung werden die Früchte in die Öl-in-Wasser-Emulsion gebracht. Dieser kann auch die Pektinesterase zugesetzt werden, wenn ein separates Pektinesterasebad vermieden werden soll. Die auf die Emulsionsbehandlung folgendeTrocknung kann in bekannter Weise in einem Luftbandtrockner bzw. gängigen ein- oder mehrstufigen Trocknungsanlagen erfolgen. Ein Beispiel für eine Trocknungsanlage mit Mikrowellentrocknung ist der DE 196 43 989 A1 entnehmbar. Auch spezielle Vakuumtrockner und Gefriertrockner sind möglich.

Der Vorteil der von der Calcium-Ionen- und Pektinesterasebehandlung getrennten Trennölemulsionsbehandlung besteht darin, daß austretende Fruchtsaftmengen sich nur in der Calcium-Ionen- bzw. Calcium-Ionen-/Pektinesteraselösung anreichern und mit dieser problemlos entsorgt werden können. Das Volumen der Trennöl-Emulsion, die vor der Einleitung in das Abwasser einer Ölabtrennung bedarf, bleibt hingegen praktisch unverändert.

In Versuchen wurde ferner festgestellt, daß durch einen Zusatz von Saccharose (Rübenzucker) zu der Behandlungslösung das Verkleben der Früchte während der Trocknung über die Wirkung der Calcium-Ionen und der als Trennöl-Emulsion wirkenden Öl-in-Wasser-Emulsion hinaus weiter verringert wird, wobei der Zucker der Calcium-Ionenlösung bzw. der Calcium-Ionen/Enzymlösung oder der Trennölemulsion/Enzymlösung zugegeben werden kann. Letzteres ist vorteilhafter, weil dann ein Abwaschen des im ersten bzw. zweiten Verfahrensschritt bereits aufgebrachten Zuckers vermieden ist.

Bezüglich der Trennöl-Emulsion hat es sich als besonders vorteilhaft erwiesen, wenn diese aus einem Speiseöl mit einer Viskosität von 20 - 40, bevorzugt 25 - 35 mPa•s hergestellt wird. Solche Öle sind beispielsweise Triglyzeride mittelkettiger Fettsäuren mit 8 bis 10 C-Atomen in der Fettsäurekette, die sogenannten MCT-Öle. Infolge ihres guten Spreitverhaltens bilden diese Öle, auch wenn sie in einer Emulsion eingesetzt werden, einen sehr dünnen Ölfilm auf den Fruchtstücken, der ein Verkleben und Aneinanderhaften der einzelnen Fruchtstücke während der Trocknung wirkungsvoll verhindert. Darüber hinaus sind diese Öle völlig geschmacksneutral, so daß die nur sehr geringen, auf dem Trockengut verbleibenden Ölmengen in keiner Weise geschmacklich in Erscheinung treten.

Bei der Auswahl des Emulgators sind die auch für Verarbeitungshilfsstoffe gültigen lebensmittelrechtlichen Vorschriften zu beachten. Es wurde gefunden, daß Lecithine auch unter dem Gesichtspunkt der Trennwirkung besonders geeignet sind. Entölte, enzymatisch hydrolysierte Sojalecithine haben sich speziell als geeignet erwiesen. Daneben sind Sorbate und Weinsäureester erfolgreich getestet worden. Auch unter den bzw. anderen lebensmittelrechtlich zulässigen nichtionischen Emulgatoren findet der Fachmann weitere geeignete Kandidaten.

Erfindungsgemäß wird bevorzugt mit einem Anteil Emulgator von etwa 2,5 Gew.% der Gesamtemulsion bei etwa 5 Gew.% Ölgehalt gearbeitet. Mit den in den Unteransprüchen definierten Gehaltsbereichen liegt damit auch der relative Anteil Emulgator zu Öl recht hoch. Vorteilhafterweise liegt das Verhältnis Emulgator zu Öl bei etwa 1:10 bis 1:1 und bevorzugt um etwa 1:2. Noch höhere Emulgatoranteile sind zwar prinzipiell möglich und auch getestet worden, jedoch aus Kostengründen unzweckmäßig.

Von den Pektinesterasen eignen sich hauptsächlich die gängigen aus Mikroorganismen wie Aspergillus Niger gewonnenen Produkte wie ROHAPECT MPE (eingetragene Marke) der Röhm Enzyme GmbH.

Die in den Unteransprüchen angegebenen bevorzugten Gewichtsprozentbereiche für die Zugabe der Mittel sind bezogen auf die jeweilige Behandlungslösung, in der sich das Mittel befindet. Da die Anteile der jeweils in den wässrigen Lösungen eingesetzten Mittel relativ gering sind, ergeben sich kaum Verschiebungen beim Übergang von mehreren zu einer Behandlungslösung. In den angegebenen Bereichen können ein Gelieren und eine solche Verhärtung der Früchte vermieden werden, die die gewünschte Rehydration der Instantprodukte beeinträchtigen würden.

Im folgenden wird die Erfindung anhand der Zeichnung, die ein Ausführungsbeispiel der erfindungsgemäßen Vorrichtung zeigt, und Beispielen näher erläutert.

Beispiel 1:

Zwei Bäder mit folgender Zusammensetzung

| 1. Bad (Calciumchloridlösung): | |
|---|---|
| 30 g | (0,30 Gew.%) Calciumchlorid (CaCl$_2$ • 2 H$_2$O) |
| 9.970 g | (99,70 Gew.%) Wasser |
| 10.000 g | |

| 2. Bad (Lösung mit Trennöl-Emulsion, Enzym und Saccharose): | |
|---|---|
| 1 g | (0,01 Gew.%) Pektinesterase (Rohapect MPE, Handelsname) |
| 1000 g | (10,00 Gew.%) Saccharose (Rübenzucker) |
| 250 g | (2,50 Gew.%) Lecithin (Emultop von Lucas Meyer, Hamburg, Handelsname) |
| 500 g | (5,00 Gew.%) MCT-Öl (Delios V von Grünau Illertissen, Handelsname) |
| 8.249 g | (82,49 Gew.%) Wasser |
| 10.000 g | |

Zur Herstellung des ersten Bades wird das Calciumchlorid in Wasser aufgelöst, das so erwärmt wird, daß die Früchte oder Fruchtstücke nach dem Eintauchen die für die Wirkung des vorliegenden Pectinesterase-Enzyms im zweiten Bad optimale Temperatur annehmen. Für das verwendete Pectinesterase-Enzym liegt diese Temperatur bei etwa 35 °C. Die für dieses Enzym kritische Temperatur von 45 °C sollte nicht überschritten werden. Diese Vorgehensweise eignet sich insbesondere auch für das schnelle Auftauen tiefgefrorener Früchte.

Zur Herstellung des zweiten Bades wird ein Teil der oben angegebenen Wassermenge abgezweigt und darin zunächst das Lecithin gelöst. Anschließend wird das Öl mittels eines Dispergiergeräts im Ansatz emulgiert. Im verbleibenden Teil des Wassers wird die Saccharose gelöst. Abschließend werden beide Lösungsanteile sowie die Pectinesterase innig miteinander vermischt. Die Lösung im zweiten Bad wird dann auf die genannte optimale Temperatur für das verwendete Enzym von maximal 45 °C, vorzugsweise etwa 35 °C erwärmt.

In einer Tauchwanne werden die Früchte oder die Fruchtstücke für die Dauer von mindestens etwa 1 min, vorzugsweise etwa 5 min in die Lösung des ersten Bades eingetaucht. Dann läßt man in einer geeigneten Vorrichtung, z.B. einer Rüttelrinne, den Flüssigkeitsüberschuß abtropfen. Das Verkleben fördernde Fruchtfeinteile werden dabei mit abgeseiht.

Die kurze Verweildauer ist möglich, weil das anhaftende Calciumchlorid auch nach dem Eintauchen in das Bad noch weiter in die Fruchtstücke eindringen und wirken kann. So gelang es in einem Experiment, mit nur zweiminütiger Einwirkzeit im Calcium-Ionenbad ein gutes Ergebnis zu erzielen. Das gleiche gilt für die Pektinesterase. Die minimal möglichen Zeiten hängen allerdings auch von der Fruchtart und Beschaffenheit (Größe, Schnitt usw.) der zu behandelnden Früchte ab. Selbstverständlich ist es möglich, mit längeren Einwirkzeiten zu arbeiten, wenn man diese in Kauf nehmen kann und will.

Die so vorbehandelten Früchte wurden in gleicher Weise in einem zweiten Verfahrensschritt in das zweite Bad eingetaucht und nach Abtropfen des Flüssigkeitsüberschusses einem Trockner zugeführt, dessen Betriebsparameter den jeweils zu trocknenden Früchten angepaßt sind. Die Trocknungstemperatur wird dabei hinreichend hoch gewählt, um das verwendete Pektinesterase-Enzym zu deaktivieren. Im vorliegenden Fall reichen Temperaturen über etwa 85 °C aus.

Im zweiten Bad sind Verweildauern unter 1 Minute möglich, da die anhaftende Pektinesterase in Verbindung mit dem Calciumchlorid während der Zeit nachwirkt, die für die Aufgabe in den Trockner und die Erwärmung zur Pectinesterasedeaktivierung im Trockner benötigt wird. Die übrigen Verarbeitungshilfsstoffe (Saccharose, Öl und Emulgator) wirken während der gesamten Verweildauer im Trockner.

Die Behandlungslösungen können auch auf andere Weise, z.B. durch Besprühen auf die Früchte aufgebracht werden. Es muß allerdings gewährleistet sein, daß die Wirkstoffe eine für die Aufbringungsart ausreichende Konzentration und Einwirkdauer haben, was sowohl von der Art der Früchte, als auch deren Zustand (frisch oder gefroren) abhängt.

Nach einer erfindungsgemäßen Variante ist es auch möglich, alle Wirkstoffe in die Trennöl-Emulsion einzubringen, so daß die Behandlung in nur einem Bad erfolgen kann. Diese Variante ist wegen der Verfahrensvereinfachung dann geeignet, wenn Früchte getrocknet werden sollen, die nur zu einer geringen Saftabgabe neigen und bei denen somit die Volumenzunahme der zu entsorgenden Ölemulsion unerheblich ist. Auch wenn statt der Badlösung besprüht wird und damit der Anfall von zu entsorgender Lösung bzw. Emulsion gering ist, bietet sich diese Variante an.

Beispiel 2

Kombinationslösung für ein Bad:

| 30 g | $CaCl_2 \cdot 2\,H_2O$ |
|---|---|
| 1 g | Rohapect MPE |
| 1.000 g | Saccharose |
| 250 g | Emultop |
| 500 g | MCT-Öl Delios V |
| 8.219 g | Wasser |
| 10.000 g | |

Beispiel 3

Zwei Bäder mit folgender Zusammensetzung:

| 1. Bad | |
|---|---|
| 30 g | $CaCl_2 \cdot 2\,H_2O$ |
| 1 g | Rohapect MPE |
| 1.000 g | Saccharose |
| 8.969 g | Wasser |
| 10.000 g | |

| 2. Bad | |
|---|---|
| 250 g | Emultop |
| 500 g | MCT-Öl Delios V |
| 9.250 g | Wasser |
| 10.000 g | |

Es kann z.B. bei gefrorenen Früchten, die nur wenig zu Wasserrabgabe neigen, auch ein Wasserbad vorgeschaltet werden. Wie beim Calciumchlorid-Bad ohne Pectinesterasezugabe kann dann mit höheren Behandlungstemperaturen gearbeitet werden. Beim Beispiel 3 ist die Temperatur des 2. Bades unkritisch und kann zwischen 20 und 25 °C betragen.

Neben den angegebenen Zusammensetzungen, die sich speziell für gefrorene Erdbeerstücke als vorteilhaft erwiesen, wurden eine Vielzahl anderer Zusammensetzungen getestet, um einen bevorzugten Bereich zu ermitteln. Statt des bevorzugten Lecithins als Emulgator wurden auch Weinsäureester sowie Sorbate und Sorbatmischungen wie Lamesorb 2567 und Lamesorb SMO 20 von Grünau Illertissen erfolgreich eingesetzt.

Auch bei den bekanntermaßen schwierig zu behandelnden Bananenscheiben konnte mit der Erfindung ein bedeutender Fortschritt erzielt werden. Der Behandlungslösung wird hier noch Zitronensäure und/oder Ascorbinsäure zugesetzt.

Die Erfindung eignet sich ferner prinzipiell für alle Beerenarten. Falls Fruchtstücke wie Apfelscheiben ohnehin einer Badbehandlung ausgesetzt werden, empfiehlt sich der Zusatz der erfindungsgemäßen Verarbeitungshilfsstoffe zur Verbesserung der Konsistenz auch dann, wenn die Früchte ohne die erfindungsgemäße Konditionierung erfolgreich zu Instantprodukten verarbeitet werden könnten.

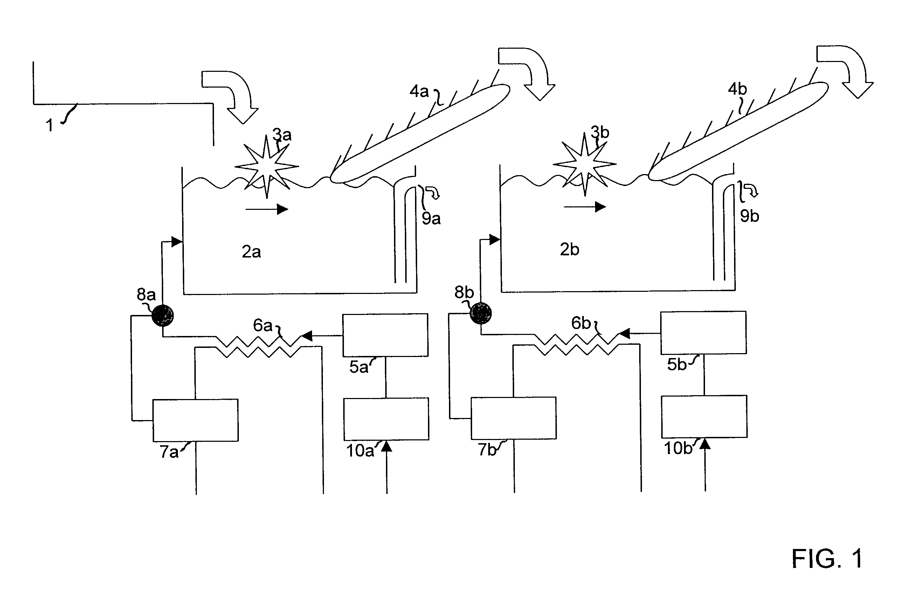

Eine Ausführung der erfindungsgemäßen Vorrichtung speziell für einen Durchsatz großer Früchtemengen und eine kontinuierliche Behandlung entsprechend Beispiel 1 umfaßt nach FIG. 1 eine Vibrationsrinne 1, ein Tauchbad 2a (1. Bad) als Aufwärmbad und ein Tauchbad 2b (2. Bad). In beiden Bädern ist jeweils ein Paddelrührer 3a, 3b vorgesehen. Siebförderbänder 4a, 4b dienen zur Förderung zwischen den Bädern und zu einer weiterverarbeitenden Trocknerstufe. Ferner sind Pumpen 5a, 5b, Wärmetauscher 6a, 6b, Temperaturregler 7a, 7b, Temperatursensoren 8a, 8b, Überläufe 9a, 9b und Wirkstoffdosierer 10a, 10b den jeweiligen Tauchbädern 2a, 2b in Form von Wannen zugeordnet.

Die Früchte bzw. Fruchtstücke gelangen über die Vibrationsrinne 1, auf der sie von Feinteilen befreit werden, in das Aufwärmbad 2a, in dem die Früchte mit Calciumchloridlösung auf eine für die Pektinesterasewirksamkeit optimale Temperatur von etwa 35 °C angewärmt werden. Mittels des Paddelrührers 3a wird zur Verbesserung des Wärmeübergangs das Bad bewegt, gleichzeitig werden die Früchte in Richtung auf das Siebförderband 4a bewegt, das die Früchte dem Tauchbad 2a entnimmt und in das Tauchbad 2b mit der Pektinesteraselösung überführt. Geringe, im Tauchbad 2a in die Lösung übergehende Saftmengen bewirken eine Volumenzunahme der Lösung, die über den in den unteren Wannenbereich ragenden Überlauf 9a abgezogen und entsorgt wird. Gleichzeitig wird über den Dosierer 10a frische Calciumchloridlösung in das Tauchbad 2a eindosiert, die mittels des Temperaturreglers 7a und des Wärmetauschers 6a auf die erforderliche Temperatur erhitzt wird. Dabei wird nach Einbringen der im Vergleich zur Lösung kälteren Früchte nachgeheizt. Vorzugsweise wird vor dem Einbringen der Früchte auf eine erhöhte Temperatur vorgeheizt, um die Nachheizung auf ein Minimum zu beschränken.

Dieses Erhitzen kann auch durch Einleiten von Direktdampf in das Bad 2a und/oder durch Hochfrequenzerwärmung bewerkstelligt werden.

Die dem Tauchbad 2a zugeführten Früchte werden mit Hilfe des Paddelrührers 3a so langsam durch das Bad bewegt, daß die erfindungsgemäße Verweildauer von vorzugsweise etwa 5 Minuten in diesem Bad erreicht wird. Im Tauchbad 2b bewirkt die Enzymlösung eine Demethoxylierung des Pectins und ermöglicht in Verbindung mit in die Früchte eindiffundierten Calcium-Ionen eine noch bessere Saftfixierung, als sie durch das Calcium-Ionenbad allein erreicht wird.

Ein mit den Früchten eingetragener Flüssigkeitsüberschuß, der nicht auf dem Siebförderband 4a abtropft, bewirkt im Tauchbad 2b eine Flüssigkeitszunahme, deren Überschuß über den Überlauf 9b ausgetragen wird.

Um die Abreicherung der Verarbeitungshilfsstoffe zu vermeiden, wird gleichzeitig frische Emulsionslösung mit Pektinesterase und Saccharose mittels des Dosierers 10b eingespeist, die vorher mittels des Temperatursensors 8b, des Temperaturreglers 7b und des Wärmetauschers 6b auf die bevorzugte Temperatur von etwa 35 °C erwärmt wird. Die maximal zulässige Temperatur im die Pektinesterase enthaltenden Bad richtet sich nach dem jeweils verwendeten Pectinesterasepräparat. Im vorliegenden Fall beträgt die kritische Obergrenze der Temperatur 45 °C. Bei niedrigeren noch anwendbaren Temperaturen bis hinab zu Raumtemperatur muß mit längeren Einwirkzeiten gearbeitet werden.

Der Paddelrührer 3b sorgt für eine Dispergierung und dient zur Verhinderung von Ausflockungen.

Die Pumpen 5a und 5b dienen zum Zusetzen der Behandlungslösungen und werden entsprechend dem jeweiligen Verbrauch eingestellt.

Nachdem das Siebförderband 4b die Früchte dem Bad 2b entnommen hat und diese auf dem Band hinreichend abgetropft sind, werden sie in den nicht dargestellten Trockner überführt, im vorliegenden Ausführungsbeispiel der Luftbandtrockner einer mehrstufigen Trocknungsanlage.

Das Verhältnis von Fruchtmenge zu Behandlungslösung konnte in der Anlage mit etwa 1:1 realisiert werden, d.h. z.B. 100 Liter Behandlungslösung bei 100 kg geschnittenen Erdbeeren.

In einem zweiten getesteten Ausführungsbeispiel der erfindungsgemäßen Vorrichtung werden die Früchte bzw. Fruchtstücke zunächst in korbartige Behälter gefüllt und diese z.B. mittels eines Pendelbecherwerks nacheinander in die verschiedenen Bäder getaucht. Hierbei entfallen die Paddelrührer 3a, 3b und die Förderbänder 4a, 4b.

**Patentansprüche**

1.  Verfahren zur Konditionierung von Früchten für eine nachfolgende Trocknung zur Herstellung eines Instantprodukts, in welchem
    die Früchte als ganzes oder als Fruchtstücke im frischen oder gefrorenem Zustand in einem oder mehreren aufeinanderfolgenden Verfahrensschritten einer Behandlung mit Calcium-Ionen, Pektinesterase und einer Öl-in-Wasser-Emulsion ausgesetzt werden, welcher ein Emulgator mit einem Anteil von mehr als 1 Gew.% zugesetzt ist.

2.  Verfahren nach Anspruch 1,
    **dadurch gekennzeichnet,**
    **daß** die Früchte in einem oder zwei aufeinander folgenden Verfahrensschritten zunächst der Behandlung mit Calcium-Ionenlösung und gleichzeitig oder anschließend der Behandlung mit Pektinesteraselösung durch Eintauchen in diese Lösung(en) unterzogen werden, bevor oder während sie in die Öl-in-Wasser-Emulsion eingetaucht werden.

**3.** Verfahren nach Anspruch 1 oder 2,
**dadurch gekennzeichnet,**
**daß** die Behandlung mit Calcium-Ionen und Pektinesterase bei einer erhöhten Temperatur von 25 bis 45 °C, bevorzugt bei etwa 35 °C erfolgt, und daß in einem der Verfahrensschritte der Behandlungslösung Saccharose zugesetzt wird.

**4.** Behandlungslösungssystem zur Konditionierung von Früchten für eine nachfolgende Trocknung zur Herstellung eines Instantprodukts, bestehend aus einer einzigen oder mehreren nacheinander angewandten Behandlungslösungen, wobei die einzige oder zuletzt angewandte Behandlungslösung eine Öl-in-Wasser-Emulsion ist, der ein Emulgator mit einem Anteil von 1 Gew.% oder mehr zugesetzt ist und zusätzlich Calcium-Ionen und Pektinesterase zugesetzt sind, von denen die Calcium-Ionen und die Pektinesterase wahlweise auch in einer oder zwei zuvor angewandten, separaten wässrigen Behandlungslösungen enthalten sein können.

**5.** Behandlungslösungssystem nach Anspruch 4,
**gekennzeichnet durch** die folgenden Gewichtsprozentanteile in der einzigen oder den aufeinanderfolgenden Behandlungslösung(en):

| Calciumchloridlösung | 0,01 bis 1 Gew.%, | vorzugsweise etwa 0,3 Gew.% |
| Pektinesteraselösung | 0,003 bis 0,03 Gew.%, | vorzugsweise etwa 0,01 Gew.% |
| Emulgator | 1 bis 7 Gew.% , | vorzugsweise 2 bis 3 Gew.% |
| Öl | 2 bis 20 Gew.%, | vorzugsweise 4 bis 6 %. |

**6.** Behandlungslösungssystem nach Anspruch 4 oder 5,
**dadurch gekennzeichnet,**
**daß** der Emulgator ein Lecithin ist, vorzugsweise ein enzymatisch hydrolysiertes Sojalecithin.

**7.** Behandlungslösungssystem nach einem der Ansprüche 4, 5 oder 6
**dadurch gekennzeichnet,**
**daß** die Öl-in-Wasser-Emulsion ein Speiseöl mit einer Viskosität von 25 bis 35 mPa•s enthält, bevorzugt in Form eines Triglycerids mittelkettiger Fettsäuren.

**8.** Behandlungslösungssystem nach einem der Ansprüche 4 bis 7,
**dadurch gekennzeichnet,**
**daß** Saccharose mit einem Gewichtsanteil von bis zu 25 Gew.%, vorzugsweise etwa 10 Gew.% der einzigen oder mindestens einer der Behandlungslösungen zugesetzt ist, und daß als Calcium-Ionenträger bevorzugt Calciumchlorid enthalten ist.

**9.** Vorrichtung zur Durchführung des Verfahrens nach einem der Ansprüche 1 bis 3, **gekennzeichnet durch** ein, zwei (2a, 2b) oder drei Bäder mit Ein- und Austragungsmitteln (1, 4a, 4b) für die Früchte, Pump- und Dosiermittel (5a, 5b, 10a, 10b) für die Behandlungslösung(en), mechanischen Mittel (3b) zur Dispergierung der Öl-in-Wasser-Emulsion und **durch** eine Temperatursteuerung (7a, 7b, 8a, 8b).

**10.** Vorrichtung nach Anspruch 9,
ferner **gekennzeichnet durch** Abzugsmittel (9a, 9b) für **durch** Fruchtsaftaustritt bedingte Volumenzunahme in dem oder den Bädern.

**11.** Vorrichtung nach Anspruch 9 oder 10,
**dadurch gekennzeichnet,**
**daß** die Ein- und Austragungsmittel (1, 4a, 4b) Siebförderbänder und/oder Vibrationsrinnen umfassen und die mechanischen Mittel (3a, 3b) in allen Behandlungsbädern vorgesehen sind, um eine Bewegung der Behandlungslösungen und Früchte zu erzielen.

FIG. 1

**Europäisches Patentamt**

## EUROPÄISCHER RECHERCHENBERICHT

Nummer der Anmeldung

EP 00 11 5567

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | WO 98 52423 A (COUTEL YVES ANDRE GERARD ;DALE RODNEY HUGH SHARPE (GB); GIST BROCA) 26. November 1998 (1998-11-26) * Seite 3, Zeile 24 - Seite 4, Zeile 23; Beispiele 1,2,8,9 * * Seite 19, Zeile 13 - Zeile 28; Ansprüche 1,7-12; Tabelle 12 * * Seite 2, Zeile 11 - Zeile 16 * * Seite 3, Zeile 1 - Zeile 12 * | 1-3 | A23B7/16 A23B7/022 A23L3/42 |
| Y | DE 30 07 469 A (HENKEL KGAA) 10. September 1981 (1981-09-10) * das ganze Dokument * | 1-3 | |
| D,A | US 2 534 263 A (C.H. HILLS) 19. Dezember 1950 (1950-12-19) * das ganze Dokument * | 1-3 | |
| A | PATENT ABSTRACTS OF JAPAN vol. 008, no. 110 (C-224), 23. Mai 1984 (1984-05-23) & JP 59 025673 A (KITSUKOO SHIYOKUHIN KOGYO KK), 9. Februar 1984 (1984-02-09) * Zusammenfassung * | | RECHERCHIERTE SACHGEBIETE (Int.Cl.7) A23L A23B A23G |
| A | DD 158 610 A (FRIEDRICH EDELTRAUD;GEILSDORF HERBERT; HENNIGER HANS; BOCK WILLY; KRAU) 26. Januar 1983 (1983-01-26) * Seite 5, Absatz 3; Anspruch 1; Beispiele * | 1 | |
| A | US 6 004 590 A (JONES SYLVIA ANNA ET AL) 21. Dezember 1999 (1999-12-21) * das ganze Dokument * | 1 | |

Der vorliegende Recherchenbericht wurde für alle Patentansprüche erstellt

| Recherchenort | Abschlußdatum der Recherche | Prüfer |
|---|---|---|
| DEN HAAG | 27. Dezember 2000 | Guyon, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 00 11 5567

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-12-2000

| Im Recherchenbericht angeführtes Patentdokument | | Datum der Veröffentlichung | Mitglied(er) der Patentfamilie | | Datum der Veröffentlichung |
|---|---|---|---|---|---|
| WO 9852423 | A | 26-11-1998 | AU | 8334898 A | 11-12-1998 |
| | | | EP | 0987953 A | 29-03-2000 |
| DE 3007469 | A | 10-09-1981 | KEINE | | |
| US 2534263 | A | 19-12-1950 | KEINE | | |
| JP 59025673 | A | 09-02-1984 | KEINE | | |
| DD 158610 | A | 26-01-1983 | KEINE | | |
| US 6004590 | A | 21-12-1999 | GB | 2303290 A | 19-02-1997 |
| | | | CA | 2181412 A | 19-01-1997 |
| | | | CN | 1146285 A | 02-04-1997 |
| | | | JP | 9103238 A | 22-04-1997 |

EPO FORM P0461

Für nähere Einzelheiten zu diesem Anhang : siehe Amtsblatt des Europäischen Patentamts, Nr.12/82